# EUROPEAN PATENT SPECIFICATION

(11) **EP 2 542 654 B1**
(45) Date of publication and mention of the grant of the patent: **19.04.2017**
(21) Application number: 11750242.7
(22) Date of filing: 03.03.2011
(51) Int. Cl.: C10K 1/34, B01J 23/38, C10J 3/84, C10K 3/02, C10J 3/00, B01J 21/06, B01J 23/40, C10J 3/48

(54) **METHOD OF REFORMING GASIFICATION GAS**
VERFAHREN ZUR REFORMIERUNG VON VERGASUNGSGAS
PROCÉDÉ DE REFORMAGE DE GAZ DE GAZÉIFICATION

(30) Priority: 03.03.2010 FI 20105201
(43) Date of publication of application: 09.01.2013
(73) Proprietor: Neste Oyj, 02150 Espoo (FI)
(72) Inventor: SIMELL, Pekka, FI-02044 Vtt (FI); KURKELA, Esa, FI-02044 Vtt (FI); HILTUNEN, Ilkka, FI-02044 Vtt (FI)
(74) Representative: Espatent Oy
(86) International application number: PCT/FI2011/050181
(87) International publication number: WO 2011/107661

(56) References cited:
- EP-A2- 2 210 858
- EP-A2- 2 210 858
- WO-A1-2007/116121
- WO-A1-2007/116121
- WO-A2-2009/132960
- DE-A1-102008 021 081
- DE-A1-102008 021 084
- US-A- 3 388 074
- US-A1- 2010 040 527

## Description

The present invention relates to a method of reforming gasification gas, according to Claim 1.

According to such a method, in order to decompose the organic impurities that are comprised in the gasification gas, it is brought into contact with a metal catalyst in a reformer in the presence of an oxidising agent.

Oxygen or water vapour gasification of biomass, such as wood, peat, straw or logging waste, generates gas which comprises hydrogen approximately 35-45 % by volume, carbon monoxide 20-30 % by volume, carbon dioxide 15-25 % by volume, methane approximately 8-12 % by volume, and nitrogen 3-5 % by volume. It is possible to use this gas as, among others, a synthesis gas of diesel-category fuels. Steam/oxygen gasification of biomass is an interesting alternative economically, as long as the scale of operation is large enough.

The problems with gasification are the great variations in gas composition and percentage of impurities. It is possible to purify gasification gas efficiently from tarry impurities and ammonia which are contained in it by using catalysts at a high temperature. Examples of catalysts which are suitable for decomposing tar are nickel catalysts and dolomites, the operating temperatures of which are at minimum 800-900 °C. With regard to the known technology, we refer to the publication by Simell, P: Catalytic hot gas cleaning of gasification gas. VTT Publications 330. Espoo 1997.

A zirconium catalyst (FI patent 110691), which has been developed by VTT Technical Research Centre of Finland, also works relatively efficiently in decomposing tars, especially heavier hydrocarbons. In addition, the zirconium catalyst enables the use of a considerably wider temperature range than does a nickel catalyst, i.e. a temperature range of 600-900 °C.

In particular, when using nickel catalysts, the high temperature required presents a problem, as does, in part, also the tendency caused by the temperature to form soot (coke) during the process of the catalytic gas conditioning. The coking problem is further made worse in applications of synthesis gas, in which also light hydrocarbons (e.g. methane) should be reformed as efficiently as possible. In this case, the metal catalysts, especially nickel, must be used at very high temperatures (950 to 1100 °C). The generation of soot causes accumulations of carbon deposits on the catalysts and the reactor, and may eventually result in clogging the whole reactor.

At the start-up of the gasification process, the use of nickel or other metal catalysts presents problems, too, because the temperature in the catalytic unit is relatively low, below 700 °C. During the start-up, the operation of the gasifier also may occasionally be unstable, and the tar content of the product gas may then occasionally rise extremely high. These conditions may together cause an accumulation of carbon on the nickel catalyst and clogging of the catalyst reactor, and accelerate deactivation of the nickel catalyst.

A catalytic reformer, which is used in the purification of gasification gas, is generally heated by using partial oxidation (partial combustion) of the gas in a position before the catalyst bed or in the catalyst bed, in which case the process is called an "autothermal reforming". After the gas is oxidised, its temperature increases considerably, in which case also the number of the thermal, i.e. coking, side reactions increases.

It is possible to reduce the coking of the metal catalyst in the reformer by using phased reforming. Phased reforming means that the reforming is carried out in several stages, i.e. several sequential reaction zones, in which two or more catalysts are used.

According to FI Patent Specification No. 118647 (Method for reforming a gas containing tarry impurities, inventors: P. Simell and E. Kurkela), in the first stage of a phased reformer ("pre-reforming stage" or "pre-reformer"), a zirconium catalyst is used. While the gas is being partly oxidised in the zirconium catalyst, the heaviest tar compounds are decomposed into gas components. Almost no carbon is generated in the zirconium catalyst and, consequently, no carbon blockage of the reactor takes place.

However, results of the trial runs which were carried out show that the use of a zirconium catalyst in the pre-reformer does not always reduce the generation of coke adequately. This applies in cases where very high temperatures (over 900 °C) are required in the secondary stage. Such occasions occur for example in applications of synthesis gasification in which a nickel catalyst must be used at high temperatures for the actual reforming.

In conditions such as these, to ensure the functionality of the process, it is most important to prevent the generation of coke in the first catalyst layers (pre-reforming stage).

It is an aim of the present invention to remove some of the disadvantages associated with known technology and to provide a completely new solution for treating gasification gas. The present invention is based on the principle that the organic impurities (tar and light hydrocarbons, such as ethylene and butadiene) which are contained in the gasification gas are decomposed in a catalytic reformer at a temperature of approximately 500 to 900 °C, and in the presence of a noble metal catalyst.

In practice, this can be carried out for example by bringing the gasification gas into a multi-stage reforming, in at least one first stage of which a noble metal catalyst is used, and in a second stage which follows a first stage, an actual reforming catalyst is used which comprises metal such as nickel or a noble metal. The noble metal catalyst of the first stage reduces the problems of the metal catalysts of the secondary stage of the reformer, which problems are associated with the generation of carbon.

As explained above, the present invention generates a new use of noble metal catalysts in the pre-reforming of gasification gas, which use eliminates problems arising from the generation of carbon in the metal catalysts of the secondary stage of a reformer.

More specifically, the method according to the present invention is a method of reforming gasification gas according to Claim 1.

Considerable advantages are achieved with the present invention. Thus, the use of a noble metal catalyst reduces the risk of deactivation of the metal catalysts and, consequently, increases the operating life of this catalyst. If the reactions for generating carbon are prevented or considerably delayed, also blockage of the reactor, caused by the generation of coke, is prevented. It is possible to utilise this solution in all such power plants or chemical industry processes that are based on gasification and in which the gas is not allowed to comprise tars. Examples of such processes are the production of electricity from gasification gas by using an engine or a turbine (IGCC), and the production of synthesis gas, for example for synthesis of fuels or methanol.

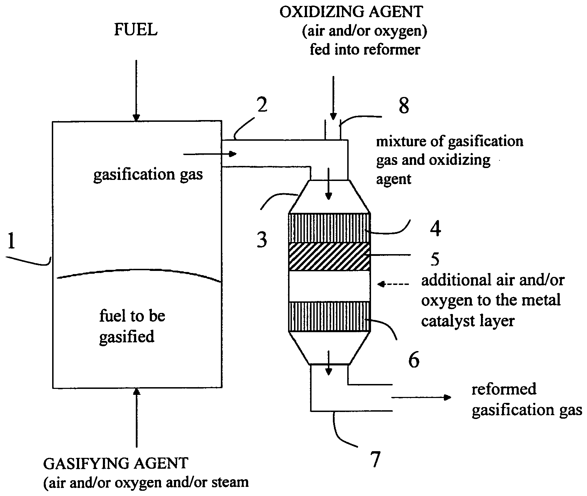

In the following, the present invention will be examined in more detail with the help of a detailed explanation and the accompanying drawing. Figure 1 shows a simplified process flowchart of an embodiment.

As described above, the present invention relates to treatment of gasification gas by reforming. In particular, in the present solution, the reforming is carried out in several stages, in which case at least in one first stage, the actual reforming catalyst used is a metal catalyst, such as a nickel or a noble metal catalyst.

Typically, the first stage is a pretreatment stage, in which light hydrocarbons that are contained in the gasification gas, and the heaviest tar compounds that appear as intermediate products, are decomposed. Light compounds which are to be decomposed are in particular unsatisfied C₁-C₆ hydrocarbons, i.e. olefinic hydrocarbons. Examples of these are C₁-C6 hydrocarbons, such as ethylene and butadiene, which comprise one or two double-bonds.

The reaction in the first stage is carried out in the presence of an oxidising agent, in which case heat is generated in the reaction, which heat can be utilised in the actual reforming stage. Preferably, the oxidising agent is fed into the gasification gas before this agent is led into the first stage of the reforming.

According to one embodiment, the procedure is that the rejects which comprise noble metal of the first stage are led directly into the reforming in the second stage.

According to another embodiment, the procedure requires that an oxidising agent is fed into the reforming in the second stage, too. Typically, it is possible to feed the oxidising agent, as an intermediate feed, into the rejects of the first stage, before that agent is led into the reforming in the second stage.

The pre-reforming is especially important and particularly so in this second application, because the role of light olefinic hydrocarbons and tar compounds in generating coke becomes more pronounced when the temperature of the gas increases greatly after the pre-reforming zone. Such an event occurs for instance when oxygen is fed into the secondary stage of the reformer.

In all the applications above, for example air, oxygen or a mixture thereof is used as an oxidising agent.

The temperature of the first reforming stage is in the range of 500 to 900 °C. The temperature range of the second stage is above 900 °C, for example above 900 °C but typically below 1500 °C.

Both in the pre-reforming and, possibly, in the actual reforming, a noble metal catalyst is used, the metal of which is chosen from the metals of groups 8-10 in the periodic table. In particular, at least one metal of the groups 8-10 in the periodic table, such as Ru, Rh, Pd or Pt, acts as the noble metal catalyst. The noble metal catalyst can be used as a single component or as a combination of two or more metals.

In principle, it is possible to use self-supporting metal catalysts, but bearing in mind the price of these metals, for example, and their mechanical resistance it is economical to use a carrier in the catalyst. Thus, typically, metals function on the surface of a carrier, such as for example on the surface of aluminum oxide or zirconium oxide. Their percentage in the carrier can be within the range of 0.01 to 20 % by weight, most preferably 0.1 to 5 % by weight, calculated from the weight of the carrier.

It is possible to produce noble metal catalysts (both for the pre-reforming and for the actual reforming) in a way which is known *per se.* The metals can be added into the carrier using any method which can be applied in the production of catalysts. An example of these is impregnation into the carrier. Typically, the impregnation is carried out by dispersing or by dissolving the metal or its precursor into a suitable medium, from which the metal is attached to the carrier by the process of precipitating or layering. It is also possible to bring the metal or its precursor to the carrier from a vapour phase, either by condensing the compound onto the surface or by binding it directly from the vapour phase to the carrier by means of chemisorption.

The carrier, in turn, can form a coating (washcoat) for instance on a particle or on a ceramic or a metallic honeycomb. It is also possible that a honeycomb or a particle works as such, i.e. without a washcoat layer, as a carrier of noble metals.

It is also possible to use nickel, especially a Ni/C catalyst, as the actual reforming catalyst, as described in the publication by Simell. P, Catalytic hot gas cleaning of gasification gas. VTT Publications 330. Espoo 1997.

A process according to the present invention can comprise one or more pretreatment zones. Thus, it is possible to arrange a noble metal catalyst in several reaction beds which are arranged in series in the direction of the gas flow. Between the reaction beds, a heat recovery device can be arranged. In that case, either the reaction zones can have catalyst beds all of which comprise the same noble metals, or different catalysts, for example different noble metals can be used in the beds of sequential noble metal catalysts.

The pretreatment zone comprises at least one zirconium catalyst zone and at least one noble metal catalyst zone.

The zirconium catalyst zone is arranged in the direction of flow in a position before the noble metal catalyst stage.

It is possible to produce the zirconium catalyst, i.e. zirconium-based catalyst, from zirconium oxide (ZrO₂), which is alloyed with another metal oxide, such as aluminum oxide (Al₂O₃). The percentage of zirconium oxide or a corresponding zirconium compound in the alloy is then preferably more than 50 % of the weight of the alloy.

The zirconium compound can be on the surface of an inert carrier, or impregnated into the carrier. It can also be the coating of a ceramic or metallic honeycomb.

With regard to the use and production of the zirconium catalyst, we refer to FI Patent No. 118647. In the present solution, the zirconium catalyst works in similar way to the application according to the above FI patent, and it decomposes the heaviest tar compounds which generate carbon, and it enhances the operation of both the noble metal catalyst and the secondary stage of the reformer.

The pre-reforming zone which is based on the combination of zirconium/noble metal catalyst is described the accompanying drawing, in which the combination of a gasifier 1 and a reforming unit 3 is represented by a simplified diagram.

Based on the above, in the present invention, at least one bed which comprises a zirconium-based catalyst is arranged in a position before one or several (typically 1-5) noble metal beds. Such a catalyst bed of the reforming, which bed is first in the flow direction, i.e. a first zirconium-based catalyst bed, very efficiently protects the noble metal catalyst in such a way that this catalyst is not coked to the point where it ceases to function.

According to another preferred embodiment, a nickel bed is arranged after the noble metal bed. In this application, too, it is possible and even economical to arrange in a position before the noble metal bed, a zirconium-base catalyst layer described above, which layer prevents coking of the noble metal layer.

In the following, the embodiment according to the accompanying drawing will be examined:

The reforming unit constitutes a pre-reforming zone 4, 5 which comprises a noble metal catalyst, and the actual reforming zone 6 which comprises a metal catalyst. The zone has a feed pipe 2 to feed in the gasification gas, and an outlet pipe 7 to remove the reformed gas.

Gas which comprises, among others, hydrogen and carbon monoxide is generated in a gasifier, labelled number 1 in the diagram, from a gasifiable fuel, such as biomass, with the help of a gasifying material. Air, oxygen or water vapour, or a mixture of two or more of these, acts as the gasifying material. The gasifying material is fed into the gasifier from below and the fuel (which is heavier than air) from above. The gasifier can be a fluidised bed reactor, a circulating mass reactor or a similar reactor.

Before the gas is led into the actual reforming zone, an oxidiser is fed into the gasification gas in order to generate reforming. If needed, the particles are separated from the gas already in this stage, or before the oxidiser is added, generally always before the first reforming stage.

The gas is led from the upper part of the reactor, via the feed pipe 2 into the reformer 3, in which it is possible to efficiently purify the gasification gas of tarry impurities and ammonia contained in it by using catalysts at a high temperature.

In the case according to the diagram, the pre-reforming zone comprises two subsequent catalyst zones 4, 5, the first of which is a zirconium catalyst layer 4 and the second is a noble metal catalyst layer 5.

The pre-reforming zone 4, 5 is installed in the direction of the gas flow in a position before the reforming catalyst 6, as shown in the diagram.

It is also possible to arrange the reactor of the pre-reforming stage 4, 5 in such a way that the zirconium and the noble metal catalysts in it are layered. In that case, the zirconium catalyst is typically the first one in the gas flow, in a position before the noble metal catalyst layer.

In a position following the last noble metal catalyst bed of the pre-reforming zone, in the direction of the gas flow, is the actual reforming catalytic zone 6, which comprises nickel catalyst or another similar actual reforming catalyst. As mentioned above, it is possible to lead oxygen or air or other oxidiser into the reforming zone in order to increase the temperature.

In the case of the diagram, an oxidiser is fed into the reject flow of the pre-reformation. The actual reforming zone 6 of the reformer can be divided in one or more zones in such a way that each one constitutes noble metal catalyst layers and nickel catalyst layers, as described above. The treatment of the gas can be carried out in separate reactors, too, which are positioned in relation to the gas flow as described above.

During the reformation which takes place in the noble metal catalyst, the light intermediate product compounds, for example ethene and butadiene, which form carbon and very heavy tar compounds, are decomposed.

Space velocity of the gas in the reformer is 500 to 50 000 l/h, preferably approximately 1000 to 20 000 l/h.

The reject flow of the reformation is of sufficient quality as a synthesis gas for diesel-category fuels or corresponding hydrocarbons. The reject flow is led through the outlet pipe 7 to further processing. In one embodiment, the outlet pipe 7 can be connected to a synthesis gas reactor (not described).

## Claims

1. A method of reforming gasification gas, in order to decompose organic impurities comprised in it, by
- contacting the gas with a metal catalyst, in the presence of an oxidising agent,
**characterized in that**
- reforming is carried out in several stages, and
- in at least one first stage a noble metal catalyst is used, and a zirconium catalyst stage is arranged in the direction of flow in a position before the noble metal catalyst stage,
- in a second stage which follows the first stage, the catalyst used is a metal catalyst
- the temperature of the first stage is within the range of 500 to 900 °C, and
- the temperature of the second stage is above 900 °C.

2. The method according to Claim 1, **characterized in that** the effluent of the first stage, which comprises noble metal, is led directly into the reforming in the second stage.

3. A method according to Claim 1 or 2, **characterized in that** an oxidising agent is fed into the gasification gas before that gas is led into the first stage of the reformation.

4. A method according to any of the preceding claims, **characterized in that** air, oxygen or a mixture thereof is used as the oxidising agent.

5. A method according to any of the preceding claims, **characterized in that** the oxidising agent is fed also into the reformation of the second stage.

6. A method according to any of the preceding claims, **characterized in that** the zirconium catalyst comprises a zirconium compound, such as zirconium oxide (ZrO₂).

7. The method according to Claim 6, **characterized in that** the zirconium catalyst comprises zirconium oxide, which is alloyed with another metal oxide, such as aluminum oxide, or the zirconium compound is on the surface of an inert carrier or impregnated into a carrier.

8. A method according to any of the preceding claims, **characterized in that** the space velocity of the gas in the reformation is 500 to 50 000 l/h, preferably 1000 to 20 000 l/h.

9. A method according to any of the preceding claims, **characterized in that** at least one metal of groups 8 to 10 in the periodic table, such as Ru, Rh, Pd or Pt, either as a single component or as a combination of two or more metals, acts as the noble metal catalyst.

10. A method according to any of the preceding claims, **characterized in that** the metals operate on the surface of a carrier, such as aluminum oxide or zirconium oxide, in which case the percentage of the metals in the carrier is within the range of 0.01 to 20 % by weight, most preferably 0.1 to 5 % by weight, calculated from the weight of the carrier.

## Patentansprüche

1. Verfahren zum Reformieren von Vergasungsgas, um darin enthaltene organische Verunreinigungen zu zersetzen, durch
- das Kontaktieren des Gases mit einem Metallkatalysator in der Anwesenheit eines oxidierenden Mittels,
**dadurch gekennzeichnet, dass**
- das Reformieren in mehreren Stufen ausgeführt wird, und
- in zumindest einer ersten Stufe ein Edelmetallkatalysator verwendet wird, und eine Zirconiumkatalysatorstufe in der Strömungsrichtung in einer Position vor der Edelmetallkatalysatorstufe angeordnet ist,
- in einer zweiten Stufe, die der ersten Stufe folgt, der verwendete Katalysator ein Metallkatalysator ist,
- die Temperatur der ersten Stufe innerhalb des Bereich von 500 bis 900°C ist, und
- die Temperatur der zweiten Stufe über 900°C ist.

2. Verfahren nach Anspruch 1, **dadurch gekennzeichnet, dass** das ausfließende Medium der ersten Stufe, welche ein Edelmetall umfasst, direkt zu dem Reformieren in der zweiten Stufe zugeführt wird.

3. Verfahren nach Anspruch 1 oder 2, **dadurch gekennzeichnet, dass** ein oxidierendes Mittel in das Vergasungsgas zugeführt wird, bevor das Gas in die erste Stufe der Reformierung zugeführt wird.

4. Verfahren nach einem der vorhergehenden Ansprüche, **dadurch gekennzeichnet, dass** Luft, Sauerstoff oder eine Mischung daraus als das oxidierende Mittel verwendet wird.

5. Verfahren nach einem der vorhergehenden Ansprüche, **dadurch gekennzeichnet, dass** das oxidierende Mittel auch in die Reformierung der zweiten Stufe zugeführt wird.

6. Verfahren nach einem der vorhergehenden Ansprüche, **dadurch gekennzeichnet, dass** der Zirconiumkatalysator eine Zirconiumverbindung, wie etwa Zirconiumoxid (ZrO₂), umfasst.

7. Verfahren nach Anspruch 6, **dadurch gekennzeichnet, dass** der Zirconiumkatalysator Zirconiumoxid umfasst, welches mit einem anderen Metalloxid, wie etwa Aluminiumoxid, legiert ist, oder die Zirconiumverbindung auf der Oberfläche eines inerten Trägers oder in einen Träger imprägniert ist.

8. Verfahren nach einem der vorhergehenden Ansprüche, **dadurch gekennzeichnet, dass** die Raumgeschwindigkeit des Gases in der Reformierung 500 bis 50000 l/h, bevorzugt 1000 bis 20000 l/h ist.

9. Verfahren nach einem der vorhergehenden Ansprüche, **dadurch gekennzeichnet, dass** zumindest ein Metall aus den Gruppen 8 bis 10 des Periodensystems, wie etwa Ru, Rh, Pd oder Pt, entweder als eine einzelne Komponente oder als eine Kombination aus zwei oder mehr Metallen als der Edelmetallkatalysator wirkt.

10. Verfahren nach einem der vorhergehenden Ansprüche, **dadurch gekennzeichnet, dass** die Metalle auf der Oberfläche eines Trägers, wie etwa Aluminiumoxid oder Zirconiumoxid, wirken, in welchem Fall der Prozentsatz der Metalle in dem Träger innerhalb des Bereichs von 0,01 bis 20 Gewichts-%, am stärksten bevorzugt 0,1 bis 5 Gewichts%, berechnet von dem Gewicht des Trägers, ist.

## Revendications

1. Procédé de reformage de gaz de gazéification, afin de décomposer des impuretés organiques qu'il comprend, par les étapes consistant à
- mettre en contact le gaz avec un catalyseur métallique, en présence d'un agent oxydant, **caractérisé en ce que**
- le reformage est réalisée sur plusieurs étages, et
- dans au moins un premier étage un catalyseur à base de métal noble est utilisé, et un étage de catalyseur à base de zirconium est disposé dans le sens de l'écoulement dans une position en avant de l'étage de catalyseur à base de métal noble,
- dans un second étage qui suit le premier étage, le catalyseur utilisé est un catalyseur métallique,
- la température du premier étage est comprise dans la plage allant de 500 à 900 °C, et
- la température du second étage est supérieure à 900 °C.

2. Procédé selon la revendication 1, **caractérisé en ce que** l'effluent du premier étage, qui comprend un métal noble, est amené directement dans le reformage dans le second étage.

3. Procédé selon la revendication 1 ou 2, **caractérisé en ce qu'**un agent oxydant est introduit dans le gaz de gazéification avant que ce gaz soit amené dans le premier étage de la reformation.

4. Procédé selon l'une quelconque des revendications précédentes, **caractérisé en ce que** de l'air, de l'oxygène ou un mélange de ces derniers est utilisé en tant qu'agent oxydant.

5. Procédé selon l'une quelconque des revendications précédentes, **caractérisé en ce que** l'agent oxydant est introduit également dans la reformation du second étage.

6. Procédé selon l'une quelconque des revendications précédentes, **caractérisé en ce que** le catalyseur à base de zirconium contient un composé de zirconium, tel que l'oxyde de zirconium (ZrO₂).

7. Procédé selon la revendication 6, **caractérisé en ce que** le catalyseur à base de zirconium comprend de l'oxyde de zirconium, lequel est allié avec un autre oxyde métallique, tel que l'oxyde d'aluminium, ou le composé de zirconium est sur la surface d'un support inerte ou imprégné dans un support.

8. Procédé selon l'une quelconque des revendications précédentes, **caractérisé en ce que** la vitesse spatiale du gaz dans la réformation est de 500 - 50 000 l/h de préférence, 1000 - 20 000 l/h.

9. Procédé selon l'une quelconque des revendications précédentes, **caractérisé en ce qu'**au moins un métal des groupes 8 à 10 du tableau périodique, tels que Ru, Rh, Pd ou Pt, soit en tant que composant unique soit en tant que combinaison de deux ou de plusieurs métaux, agit comme le catalyseur à base de métal noble.

10. Procédé selon l'une quelconque des revendications précédentes, **caractérisé en ce que** les métaux agissent sur la surface d'un support, tel que de l'oxyde d'aluminium ou de l'oxyde de zirconium, dans ce cas, le pourcentage des métaux dans le support est compris dans la plage allant de 0,01 à 20% en poids, de préférence 0,1 à 5% en poids calculé à partir du poids du support.
